# FASCICULE DE BREVET EUROPEEN

(11) **EP 2 855 376 B1**
(45) Date de publication et mention de la délivrance du brevet: **05.04.2017**
(21) Numéro de dépôt: 13728479.0
(22) Date de dépôt: 24.05.2013
(51) Int. Cl.: C03B 5/26

(54) **DISPOSITIF DE COULÉE DE VERRE FONDU ET PROCÉDÉ UTILISANT LE DISPOSITIF**
GIESSVORRICHTUNG FÜR GESCHMOLZENES GLAS UND VERFAHREN UNTER DEREN VERWENDUNG
APPARATUS FOR CASTING MOLTEN GLASS AND PROCESS USING SAID APPARATUS

(30) Priorité: 25.05.2012 FR 1254809
(43) Date de publication de la demande: 08.04.2015
(73) Titulaire: Saint-Gobain Isover, 92400 Courbevoie (FR)
(72) Inventeur: BEAUFILS, Sébastien, F-60190 Cernoy (FR); MARTINS, Patrice, F-60260 Lamorlaye (FR)
(74) Mandataire: Saint-Gobain Recherche
(86) Numéro de dépôt international: PCT/FR2013/051135
(87) Numéro de publication internationale: WO 2013/175135

(56) Documents cités:
- DE-A1-102007 024 481
- GB-A- 1 473 091
- JP-A- 8 026 740
- JP-A- 8 290 922
- JP-A- 57 088 037
- US-A- 3 560 188
- US-A- 4 681 613

## Description

L'invention concerne un dispositif de coulée de verre fondu, destiné à être utilisé sur un four de fusion de verre.

Les fours de fusion de verre peuvent avoir un orifice en fond de cuve destiné à faire couler le verre fondu depuis le four vers une installation, par exemple un dispositif de fibrage adapté à fabriquer des fibres de verre par centrifugation interne.

II est connu du document JP58-088037 un four de fusion de verre comportant à son orifice inférieur une plaque fixe munie d'un orifice et une plaque coulissante en translation également munie d'un orifice.

Il est connu du document GB1473091 un four de fusion de verre comportant à son orifice inférieur une plaque fixe munie d'un orifice et une plaque coulissante en translation également munie d'un orifice.

La viscosité du verre fondu dépend de sa composition et de sa température de fusion. Or, moins un verre est visqueux, plus il coule vite. Un problème se pose alors lorsque l'on souhaite utiliser le même four pour faire fondre des verres pouvant avoir différentes viscosités, c'est-à-dire des verres pouvant avoir des températures de fusion très différentes et/ou des verres pouvant avoir des compositions très différentes.

Il y a donc un besoin pour un dispositif de coulée de verre fondu qui permette d'utiliser un seul four pour différents types de verres aux viscosités très différentes.

Pour cela, l'invention propose un dispositif de coulée de verre fondu adapté à être installé sur un four de fusion de verre, comprenant :
- un puits de coulée ayant une sortie de diamètre donné,
- un dispositif de régulation du débit de verre fondu à la sortie du puits de coulée,
   caractérisé en ce que le dispositif de régulation du débit de verre fondu comprend :
   - une plaque amovible comportant un orifice traversant dont la surface est inférieure à la surface de la sortie du puits de coulée, et
   - un moyen d'obturation mobile adapté à obturer de façon réglable la sortie du puits de coulée ou l'orifice traversant de la plaque amovible, ledit moyen d'obturation mobile étant une plaque pleine et étant refroidi par un système de refroidissement situé dans l'épaisseur de la plaque pleine.

Selon une autre particularité, l'orifice traversant de la plaque amovible a une forme d'ellipse.

Selon une autre particularité, l'orifice traversant de la plaque amovible a une forme circulaire.

Selon une autre particularité, l'orifice traversant de la plaque amovible (4) a une forme de polygone.

Selon une autre particularité, le moyen d'obturation mobile est mobile en rotation ou en translation.

Selon une autre particularité, le puits de coulée en en Molybdène.

Selon une autre particularité, le dispositif de coulée de verre fondu comprend en outre une butée pour le moyen d'obturation mobile, la butée définissant une position de fermeture maximale de la sortie du puits de coulée ou de l'orifice traversant de la plaque amovible par le moyen d'obturation mobile.

Selon une autre particularité, les parois du puits de coulée et de la sortie du puits de coulée, destinées à être en contact avec du verre fondu, sont chacun recouverts d'une chemise en métal rare.

Selon une autre particularité, la chemise est en Iridium.

L'invention concerne également un four de fusion de verre équipé d'un dispositif de coulée de verre fondu tel que décrit ci-dessus.

Selon une autre particularité, le four est un four électrique comprenant une cuve en blocs réfractaires et au moins une électrode immergée dans le verre fondu.

L'invention concerne également un procédé de fabrication d'articles en matière minérale, comprenant la fusion d'une composition de matière minérale dans le four décrit ci-dessus, puis la transformation de la matière minérale fondue en articles en matière minérale, tels que des fibres minérales ou de la laine minérale, par un organe de transformation, tel qu'un organe de fibrage.

Selon une autre particularité, la plaque amovible est utilisée lorsque la viscosité du verre fondu est inférieure ou égale à au moins 20% de la viscosité du verre le plus visqueux avec lequel le dispositif de coulée de verre fondu peut être utilisé sans plaque amovible. D'autres caractéristiques et avantages de l'invention vont à présent être décrits en regard des dessins sur lesquels :
- La figure 1 représente une vue en coupe d'un four équipé d'un dispositif de coulée de verre fondu selon l'invention ;
- La figure 2 est une vue de détail en coupe de la figure 1, montrant plus précisément le dispositif de coulée de verre fondu selon l'invention ;
- La figure 3 représente une vue de dessous d'un exemple de dispositif de régulation du débit de verre fondu d'un dispositif de coulée de verre fondu selon l'invention ;
- Les figures 4a et 4b représentent des vues en perspectives des chemises 5a et 5b du puits de coulée et de la sortie du puits de coulée du dispositif de coulée de verre fondu selon l'invention.

Les numéros de référence qui sont identiques sur les différentes figures représentent des éléments similaires ou identiques.

Dans l'ensemble de la demande, il faut comprendre le terme « verre » comme un matériau minéral silicaté de structure essentiellement, voire totalement, amorphe.

L'invention se rapporte à un dispositif de coulée de verre fondu depuis un four de fusion de verre. Le dispositif comprend un puits de coulée ayant une sortie de diamètre donné et un dispositif de régulation du débit de verre à la sortie du puits de coulée.

Le dispositif de régulation du débit de verre comprend une plaque amovible comportant un orifice traversant dont la surface est inférieure à la surface de la sortie du puits de coulée et un moyen d'obturation mobile adapté à obturer de façon réglable la sortie du puits de coulée ou l'orifice traversant de la plaque amovible.

La plaque amovible et le moyen d'obturation permettent tous les deux de réduire le diamètre de coulée du verre fondu. Le moyen d'obturation mobile permet en plus de régler le débit du verre fondu. La plaque amovible est particulièrement utile avec des verres très peu visqueux. Le diamètre de coulée du verre fondu étant réduit par la plaque amovible, le réglage par le moyen d'obturation mobile est alors beaucoup plus précis car réalisé sur un trou plus petit. En l'absence de la plaque amovible, pour un verre très peu visqueux, il faudrait réduire énormément le diamètre de coulée du verre fondu avec le moyen d'obturation mobile, avec un réglage de ce fait beaucoup plus difficile. De plus, il y a un risque de cristallisation du verre si seul le moyen d'obturation mobile est utilisé pour réduire le diamètre de coulée du verre fondu avec des verres très peu visqueux, car une partie du verre fondu, éloigné de l'orifice de coulée, peut être quasiment immobile sur le moyen d'obturation. De même, dans le cas où le moyen d'obturation mobile est refroidi, il y a un risque de cristallisation du verre si seul le moyen d'obturation mobile est utilisé avec des verres très peu visqueux car le verre fondu serait alors en contact avec une grande surface refroidie.

La combinaison de la plaque amovible et du moyen d'obturation permet ainsi d'adapter le four de fusion de verre à des différences de viscosités importantes.

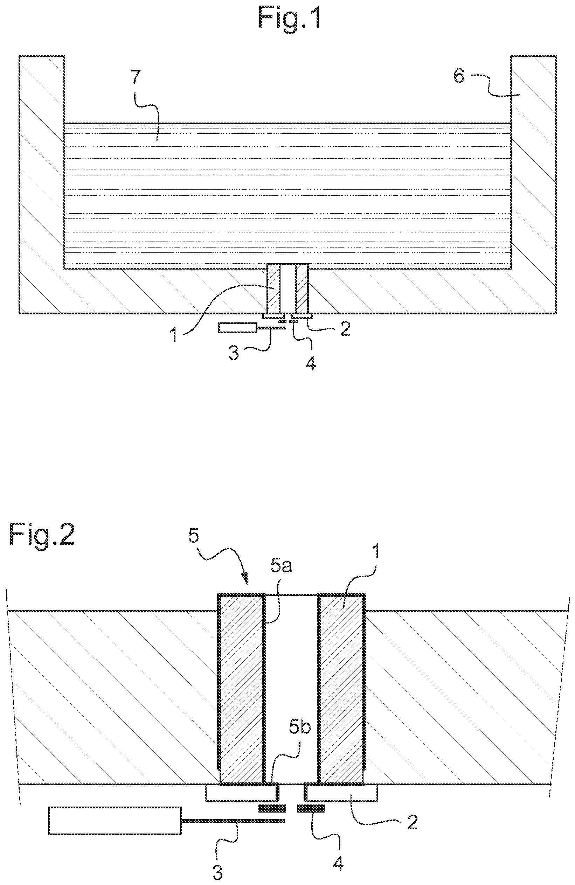

La figure 1 représente une vue en coupe d'un four équipé d'un dispositif de coulée de verre fondu selon l'invention.

Le dispositif de coulée de verre fondu est destiné à être installé sur un four 6 tel que celui de la figure 1, par exemple en fond de cuve comme représenté sur la figure.

Le four 6 sera décrit plus en détail plus loin dans la description.

La figure 2 est une vue de détail en coupe de la figure 1, montrant plus précisément le dispositif de coulée de verre fondu selon l'invention.

Le dispositif de coulée de verre fondu comprend un puits de coulée 1 adapté à être installé sur un orifice de sortie de verre fondu d'un four, comme représenté sur les figures 1 et 2. De préférence, pour une facilité de fabrication, le puits de coulée 1 a une forme tubulaire avec deux extrémités ouvertes. Le puits de coulée 1 est par exemple en Molybdène ou en acier réfractaire. Lorsque le puits de coulée 1 est installé en fond de cuve de four, le verre fondu pénètre dans le puits de coulée 1 par son extrémité supérieure et en sort par son extrémité inférieure. A l'extrémité du puits de coulée 1 par laquelle du verre fondu est destiné à sortir, le puits de coulée comporte une sortie 2 qui peut avoir un diamètre inférieur au diamètre intérieur du puits de coulée 1. La sortie 2 est par exemple également en Molybdène ou en acier réfractaire. Le diamètre à la sortie 2 du puits de coulée 1 est par exemple compris entre 20 et 35 mm.

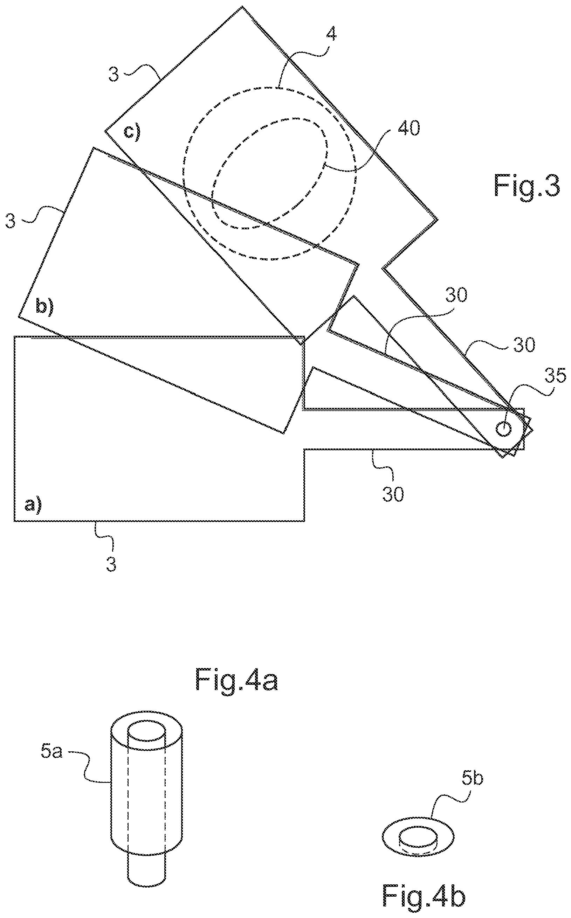

Le puits de coulée 1 et la sortie 2 sont de préférence chacun recouverts, sur leurs parois destinées à être en contact avec du verre fondu, d'une chemise 5a, 5b en métal rare, tel qu'en Platine en ou Iridium, afin de protéger le puits de coulée 1 d'une éventuelle corrosion et d'une érosion précoce. Les chemises 5a, 5b, représentées plus précisément sur les figures 4a et 4b, sont réalisées à partir d'une feuille métallique en métal rare et ont une épaisseur d'au moins 0,2 mm, de préférence de 0,5 mm environ.

Le dispositif de coulée de verre fondu comprend également un dispositif de régulation du débit de verre fondu à la sortie du puits de coulée.

La figure 3 représente une vue de dessous d'un exemple de dispositif de régulation du débit de verre fondu.

Le dispositif de régulation du débit de verre fondu comprend un moyen d'obturation mobile 3. Ce moyen d'obturation mobile 3 est adapté à fermer plus ou moins la sortie 2 du puits de coulée 1 pour régler le débit de verre fondu coulant de la sortie 2 du puits de coulée 1. Le moyen d'obturation mobile 3 est mobile entre une position complètement ouverte (position (a) sur la figure 3) et une position complètement fermée (position (c) sur la figure 3). Le moyen d'obturation mobile 3 peut occuper n'importe quelle position (b) entre les positions extrêmes dites « complètement ouverte » (a) et « complètement fermée » (c). Le dispositif de régulation du débit de verre fondu peut comprendre une butée pour définir la position « complètement fermée » (c) du moyen d'obturation mobile.

Le moyen d'obturation mobile 3 peut être par exemple une plaque pleine mobile en rotation autour d'un axe de rotation 35, par exemple via une tige 30, comme représenté sur la figure 3.

En variante, le moyen d'obturation mobile 3 peut être constitué d'une plaque pleine mobile en translation

En variante, le moyen d'obturation mobile 3 peut être constitué de deux éléments mobiles en translation, adaptés à se déplacer dans deux directions opposées (l'un vers l'autre ou l'un à l'opposé de l'autre).

Le dispositif de régulation du débit de verre fondu comprend également une plaque amovible 4 comportant un orifice traversant 40 dont la surface est inférieure à la surface de la sortie 2 du puits de coulée 1. Les dimensions du trou traversant 40 de la plaque amovible permettent de réduire l'orifice de coulée du verre fondu d'au moins 30%, de préférence d'au moins 40%, voire d'au moins 50%, par rapport à la sortie 2 du puits de coulée 1.

De préférence, l'orifice traversant 40 a la forme d'une ellipse. En variante, elle peut avoir une forme circulaire ou toute autre forme adaptée, telle que par exemple carrée, rectangulaire ou toute autre forme polygonale. La forme en ellipse permet en particulier d'avoir une surface obstruée plus régulière par rapport à une forme circulaire lors du déplacement angulaire du moyen d'obturation 3 autour de l'axe de rotation 35.

La plaque amovible 4 peut facilement être fixée sous le four, sous la sortie 2 du puits de coulée 1, par exemple à l'aide de vis, et facilement retirée. Pendant l'intervention, la sortie du four est fermée et le moyen d'obturation mobile 3 est démonté. L'installation ou l'enlèvement de la plaque amovible 4 peut ainsi être réalisée en quelques minutes.

La plaque amovible 4 est de préférence en métal rare, par exemple en Platine, de façon à résister à la corrosion du verre à haute température.

Lorsque la plaque amovible est installée, le moyen d'obturation mobile 3 est adapté à obturer de façon réglable l'orifice traversant 40 de la plaque amovible 4.

La plaque amovible 4 est par exemple utilisée lorsque la viscosité du verre fondu est inférieure ou égale à au moins 20% de la viscosité du verre le plus visqueux avec lequel le dispositif de coulée de verre fondu peut être utilisé sans plaque amovible.

De préférence, le moyen d'obturation mobile 3 est refroidi par un système de refroidissement situé dans l'épaisseur de la plaque pleine. Le refroidissement du moyen d'obturation mobile 3 permet d'améliorer sa longévité.

L'invention concerne également un four 6 de fusion de verre équipé d'un dispositif de coulée de verre fondu tel que décrit plus haut.

Le four 6 est par exemple un four électrique comprenant une cuve en blocs réfractaires et au moins une électrode immergée dans le verre fondu 7.

Le four est adapté à être utilisé pour fabriquer des articles en matière minérale, par exemple en fibres de verre ou en laine de verre.

Ainsi, l'invention concerne également un procédé de fabrication d'articles en matière minérale (verre), comprenant la fusion d'une composition de matière minérale (verre) dans le four selon l'invention, puis la transformation de la matière minérale fondue (verre fondu) en articles en matière minérale, tels que des fibres minérales ou de la laine minérale, par un organe de transformation, tel qu'un organe de fibrage.

## Revendications

1. Dispositif de coulée de verre fondu adapté à être installé sur un four de fusion de verre, comprenant :
- un puits de coulée (1) ayant une sortie (2) de diamètre donné,
- un dispositif de régulation du débit de verre fondu à la sortie du puits de coulée,
**caractérisé en ce que** le dispositif de régulation du débit de verre fondu comprend :
- une plaque amovible (4) comportant un orifice traversant (40) dont la surface est inférieure à la surface de la sortie (2) du puits de coulée (1), et
- un moyen d'obturation mobile (3) adapté à obturer de façon réglable la sortie (2) du puits de coulée (1) ou l'orifice traversant (40) de la plaque amovible (4), ledit moyen d'obturation mobile (3) étant une plaque pleine et étant refroidi par un système de refroidissement situé dans l'épaisseur de la plaque pleine.

2. Dispositif selon la revendication 1, dans lequel l'orifice traversant (40) de la plaque amovible (4) a une forme d'ellipse.

3. Dispositif selon la revendication 1, dans lequel l'orifice traversant (40) de la plaque amovible (4) a une forme circulaire.

4. Dispositif selon la revendication 1, dans lequel l'orifice traversant (40) de la plaque amovible (4) a une forme de polygone.

5. Dispositif selon l'une quelconque des revendications 1 à 4, dans lequel le moyen d'obturation mobile (3) est mobile en rotation ou en translation.

6. Dispositif selon l'une des revendications précédentes, dans lequel le puits de coulée est en Molybdène.

7. Dispositif selon l'une quelconque des revendications 1 à 6, comprenant en outre une butée pour le moyen d'obturation mobile (3), la butée définissant une position de fermeture maximale (c) de la sortie (2) du puits de coulée (1) ou de l'orifice traversant (40) de la plaque amovible (4) par le moyen d'obturation mobile (3).

8. Dispositif selon l'une quelconque des revendications 1 à 7, dans lequel les parois du puits de coulée (1) et de la sortie (2) du puits de coulée, destinées à être en contact avec du verre fondu, sont chacun recouverts d'une chemise (5a, 5b) en métal rare.

9. Dispositif selon la revendication 8, dans lequel la chemise (5a, 5b) est en Iridium.

10. Four (6) de fusion de verre équipé d'un dispositif selon l'une quelconque des revendications 1 à 9.

11. Four (6) selon la revendication 10, le four (6) étant un four électrique comprenant une cuve en blocs réfractaires et au moins une électrode immergée dans le verre fondu (7).

12. Procédé de fabrication d'articles en matière minérale, comprenant la fusion d'une composition de matière minérale dans le four selon l'une quelconque des revendications 10 à 11, puis la transformation de la matière minérale fondue en articles en matière minérale, tels que des fibres minérales ou de la laine minérale, par un organe de transformation, tel qu'un organe de fibrage.

13. Procédé selon la revendication 12, dans lequel la plaque amovible (4) est utilisée lorsque la viscosité du verre fondu (7) est inférieure ou égale à au moins 20% de la viscosité du verre le plus visqueux avec lequel le dispositif de coulée de verre fondu peut être utilisé sans plaque amovible.

## Patentansprüche

1. Gießvorrichtung für geschmolzenes Glas zum Einbau in einen Glasschmelzofen, umfassend:
- einen Gießschacht (1) mit einem Auslass (2) eines gegebenen Durchmessers,
- eine Vorrichtung zur Steuerung der Durchflussmenge geschmolzenen Glases am Auslass des Gießschachts,
**dadurch gekennzeichnet, dass** die Vorrichtung zur Steuerung der Durchflussmenge geschmolzenen Glases umfasst:
- eine abnehmbare Platte (4) mit einer Durchgangsöffnung (40), deren Oberfläche kleiner ist als die Oberfläche des Auslasses (2) des Gießschachts (1), und
- eine bewegliche Abdichteinrichtung (3) zum verstellbaren Abdichten des Auslasses (2) des Gießschachts (1) oder der Durchgangsöffnung (40) der abnehmbaren Platte (4), wobei die bewegliche Abdichteinrichtung (3) eine massive Platte ist und von einem Kühlsystem gekühlt ist, das sich in der Dicke der massiven Platte befindet.

2. Vorrichtung nach Anspruch 1, wobei die Durchgangsöffnung (40) der abnehmbaren Platte (4) eine elliptische Form besitzt.

3. Vorrichtung nach Anspruch 1, wobei die Durchgangsöffnung (40) der abnehmbaren Platte (4) eine Kreisform besitzt.

4. Vorrichtung nach Anspruch 1, wobei die Durchgangsöffnung (40) der abnehmbaren Platte (4) eine polygonale Form besitzt.

5. Vorrichtung nach einem der Ansprüche 1 bis 4, wobei die bewegliche Abdichteinrichtung (3) dreh- oder translationsbeweglich ist.

6. Vorrichtung nach einem der vorhergehenden Ansprüche, wobei der Gießschacht aus Molybdän besteht.

7. Vorrichtung nach einem der Ansprüche 1 bis 6, ferner umfassend einen Anschlag für die bewegliche Abdichteinrichtung (3), wobei der Anschlag eine Stellung (c) des maximalen Verschlusses des Auslasses (2) des Gießschachts (1) oder der Durchgangsöffnung (40) der abnehmbaren Platte (4) durch die bewegliche Abdichteinrichtung (3) definiert.

8. Vorrichtung nach einem der Ansprüche 1 bis 7, wobei die Wände des Gießschachts (1) und des Auslasses (2) des Gießschachts, die zum Kontakt mit dem geschmolzenen Glas vorgesehen sind, jeweils mit einem Mantel (5a, 5b) aus Seltenmetall überzogen sind.

9. Vorrichtung nach Anspruch 8, wobei der Mantel (5a, 5b) aus Iridium besteht.

10. Glasschmelzofen (6), der mit einer Vorrichtung nach einem der Ansprüche 1 bis 9 ausgestattet ist.

11. Ofen (6) nach Anspruch 10, wobei der Ofen (6) ein elektrischer Ofen mit einem Behälter aus feuerfesten Blöcken und mindestens einer in das geschmolzene Glas (7) eingetauchten Elektrode ist.

12. Verfahren zur Herstellung von Gegenständen aus mineralischem Material, umfassend das Schmelzen einer Zusammensetzung aus mineralischem Material in dem Ofen nach einem der Ansprüche 10 und 11, sodann die Umwandlung des geschmolzenen mineralischen Materials in Gegenstände aus mineralischem Material, wie etwa Mineralfasern oder Mineralwolle, durch ein Umwandlungselement wie etwa ein Zerfaserungselement.

13. Verfahren nach Anspruch 12, wobei die abnehmbare Platte (4) verwendet wird, wenn die Viskosität des geschmolzenen Glases (7) kleiner oder gleich mindestens 20% der Viskosität des viskosesten Glases ist, mit dem die Gießvorrichtung für geschmolzenes Glas ohne abnehmbare Platte verwendet werden kann.

## Claims

1. A device for flowing molten glass suitable for installation on a glass melting furnace, comprising:
- a flow channel (1) having an outlet (2) of given diameter; and
- a device for regulating the flow of molten glass at the outlet of the flow channel,
**characterized in that** the device for regulating the flow of molten glass comprises:
- a removable plate (4) comprising a through-orifice (40) the area of which is smaller than the area of the outlet (2) of the flow channel (1); and
- a movable shuttering means (3) suitable for adjustably shuttering the outlet (2) of the flow channel (1) or the through-orifice (40) of the removable plate (4), said movable shuttering means being an unapertured plate and being cooled by a cooling system located in the thickness of the unapertured plate.

2. The device as claimed in claim 1, in which the through-orifice (40) of the removable plate (4) is ellipse shaped.

3. The device as claimed in claim 1, in which the through-orifice (40) of the removable plate (4) is circular.

4. The device as claimed in claim 1, in which the through-orifice (40) of the removable plate (4) is polygon shaped.

5. The device as claimed in any one of claims 1 to 4, in which the movable shuttering means (3) is able to move in rotation or in translation.

6. The device as claimed in any one of the preceding claims, in which the flow channel is in molybdenum.

7. The device as claimed in any one of claims 1 to 6, furthermore comprising a stop for the movable shuttering means (3), the stop defining a maximum closing position (c) of the outlet (2) of the flow channel (1) or of the through-orifice (40) of the removable plate (4) by the movable shuttering means (3).

8. The device as claimed in any one of claims 1 to 7, in which the walls of the flow channel (1) and the outlet (2) of the flow channel, designed to be in contact with molten glass, are each covered with a jacket (5a, 5b) made of a noble metal.

9. The device as claimed in claim 8, in which the jacket (5a, 5b) is in iridium.

10. A furnace (6) for melting glass equipped with a device according to any one of claims 1 to 9.

11. The furnace (6) as claimed in claim 10, the furnace (6) being an electric furnace comprising a tank made of refractory blocks and at least one electrode immersed in the molten glass (7).

12. A process for manufacturing articles made of a mineral material, comprising melting a mineral material composition in the furnace as claimed in any one of claims 10 to 11, then converting the molten mineral material into articles made of mineral material, such as mineral fibers or mineral wool, via a conversion member, such as a fiberization member.

13. The process as claimed in claim 12, in which the removable plate (4) is used when the viscosity of the molten glass (7) is less than or equal to at least 20% of the viscosity of the most viscous glass with which the device for flowing molten glass can be used without the removable plate.
